(19) Europäisches Patentamt / European Patent Office / Office européen des brevets

(11) **EP 2 249 425 A2**

(12) **EUROPEAN PATENT APPLICATION**
published in accordance with Art. 153(4) EPC

(43) Date of publication:
**10.11.2010 Bulletin 2010/45**

(21) Application number: **09708721.7**

(22) Date of filing: **23.01.2009**

(51) Int Cl.:
***H01M 10/04*** *(2006.01)*

(86) International application number:
**PCT/KR2009/000379**

(87) International publication number:
**WO 2009/099279 (13.08.2009 Gazette 2009/33)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **05.02.2008 KR 20080011935**

(71) Applicant: **SK Energy Co., Ltd.**
**Seoul 110-110 (KR)**

(72) Inventors:
• **OH, Jeon Keun**
  **Daejeon 305-712 (KR)**

• **LEE, Eun Joo**
  **Daejeon 300-712 (KR)**
• **LEE, Jae Myoung**
  **Pyeongtaek-si**
  **Gyeonggi-do 450-150 (KR)**
• **HAN, Ghi Soo**
  **Seoul 151-778 (KR)**

(74) Representative: **Joly, Jean-Jacques et al**
**Cabinet Beau de Loménie**
**158, rue de l'Université**
**75340 Paris cedex 07 (FR)**

(54) **LITHIUM SECONDARY BATTERY AND MANUFACTURING METHOD FOR SAME**

(57)    The present invention relates to a lithium secondary battery with an improved structure and characteristics, and a method of manufacturing the same. The lithium secondary battery of the present invention includes: a first electrode having a first current collector, and first active material patterns formed on the first current collector such that the first active material patterns are symmetrically disposed with a first center non-coated portion formed therebetween; a second electrode having a second current collector, and second active material patterns formed on the second current collector such that the second active material patterns are symmetrically disposed with a second center non-coated portion formed therebetween; a first electrode tab connected to the first center non-coated portion; and a second electrode tab connected to the second center non-coated portion.

**FIG. 4**

EP 2 249 425 A2

## Description

[Technical Field]

The present invention relates to a lithium secondary battery, and, more particularly, to a lithium secondary battery with an improved structure and characteristics and a method of manufacturing the same.

[Background Art]

Generally, chemical batteries are referred to as batteries generating electric energy using chemical reactions, and these chemical batteries are classified into primary batteries which are disposable batteries and secondary batteries which can be repetitively used because they can be charged and discharged. Among the chemical batteries, secondary batteries are increasingly used due to the advantage of being able to be used repetitively.

Among secondary batteries, lithium secondary batteries are widely used in electronic and communicating equipment or high-power hybrid automobiles because they have a high energy density per unit weight Such lithium secondary batteries include a cathode and an anode between which a separator is disposed, and a cathode tab and an anode tab respectively connected to the cathode and the anode.

A conventional lithium secondary battery is configured such that a cathode tab and an anode tab, that is, electrode tabs, are connected to the ends of the cathode and the anode, that is, electrodes, thus making the distance the electric current moves long at the time of operating the lithium secondary battery. Particularly, the distance between the electrode tab and the other end of the electrode to which the electrode tab is not connected approximately correspond to the total length of the electrode.

As such, the conventional lithium secondary battery is problematic in that its high-rate discharging characteristics are not good because the distance the electric current moves is long, and in that its temperature is excessively increased by the heat generated by the movement of electric current.

[Disclosure]

[Technical Problem]

Accordingly, the present invention has been devised to solve the above-mentioned problems, and an object of the present invention is to provide a lithium secondary battery which can improve high-rate discharging characteristics by decreasing the distance the electric current moves and which can minimize the temperature increase when being operated, and a method of manufacturing the same.

[Technical Solution]

In order to accomplish the above object, the present invention provides a lithium secondary battery, including: a first electrode having a first current collector, and first active material patterns formed on the first current collector such that the first active material patterns are symmetrically disposed with a first center non-coated portion formed therebetween; a second electrode having a second current collector, and second active material patterns formed on the second current collector such that the second active material patterns are symmetrically disposed with a second center non-coated portion formed therebetween; a first electrode tab connected to the first center non-coated portion; and, a second electrode tab connected to the second center non-coated portion.

[Advantageous Effects]

According to the lithium secondary battery of the present invention, active material patterns substantially participating in electrochemical reactions are symmetrically disposed, and an electrode tab is connected to a center non-coated portion formed therebetween, thus reducing the distance the electric current moves. Therefore, the lithium secondary battery can be used in places where a battery requiring high power is needed because its high-rate discharging characteristics can be improved, and its reliability can be improved by minimizing the exothermic phenomenon generated by the movement of electric current.

In particular, when a cathode tab and an anode tab are respectively connected to a cathode center non-coated portion and an anode center non-coated portion, the distance the electric current moves can be minimized at both the cathode and the anode, thus improving its high-rate discharging characteristics and minimizing the exothermic phenomenon.

According to the method of manufacturing a lithium secondary battery of the present invention, current collectors are cut such that a plurality of active material patterns formed at regular intervals are provided, and thus electrodes having center non-coated portions can be easily formed. That is, according to the method of manufacturing a lithium secondary battery of the present invention, the lithium secondary battery having improved high-rate discharging characteristics and exothermic effects can be manufactured in a highly productive fashion.

[Brief Description of Drawing]

FIG. 1 is a perspective view showing a lithium secondary battery according to an embodiment of the present invention;
FIG. 2 is a plan view showing an unrolled cathode connected with a cathode tab in the lithium secondary battery of FIG. 1;

FIG. 3 is a plan view showing an unrolled anode connected with an anode tab in the lithium secondary battery of FIG. 1;

FIG. 4 is a sectional view showing the lithium secondary battery taken along the line III-III of FIG. 1;

FIG. 5 is a flowchart showing a method of manufacturing a lithium secondary battery according to an embodiment of the present invention;

FIGS. 6 (a) to (c) are views showing a process of forming electrodes in the method of FIG. 5;

FIG. 7 is a view showing a process of attaching electrode tabs in the method of FIG. 5;

FIG. 8 is a graph showing the relationship of battery voltage to discharge capacity when the discharge rates of the lithium secondary battery of the Experimental Example and the discharge rates of the lithium secondary battery of the Comparative Example are 20 CmA and 25 CmA, respectively;

FIG. 9 is a graph showing the relationship of temperature increase to discharge capacity when the discharge rates of the lithium secondary battery of the Experimental Example and the discharge rates of the lithium secondary battery of the Comparative Example are 20 CmA and 25 CmA, respectively;

FIG. 10 is a graph showing the relationship of discharge capacity to discharge rate in the lithium secondary battery of the Experimental Example and the lithium secondary battery of the Comparative Example; and

FIG. 11 is a graph showing the relationship of temperature increase to discharge rate in the lithium secondary battery of the Experimental Example and the lithium secondary battery of the Comparative Example.

[Best Mode]

A lithium secondary battery according to the present invention includes: a first electrode including a first current collector, and first active material patterns formed on the first current collector such that the first active material patterns are symmetrically disposed with a first center non-coated portion formed therebetween; a second electrode including a second current collector, and second active material patterns formed on the second current collector such that the second active material patterns are symmetrically disposed with a second center non-coated portion formed therebetween; a first electrode tab connected to the first center non-coated portion; and a second electrode tab connected to the second center non-coated portion.

Here, a center line passing through the center of the first electrode in the longitudinal direction may be located in the first center non-coated portion, and a center line passing through the center of the second electrode in the longitudinal direction may be located in the second center non-coated portion.

When the length of the first electrode is A1 and the length between one end of the first electrode in the longitudinal direction and the center of the first electrode tab is B1, the A1 and the B1 may satisfy the following condition:

$$0.4 < B1/A1 < 0.6$$

When the length of the second electrode is A2 and the length between one end of the second electrode in the longitudinal direction and the center of the second electrode tab is B2, the A2 and the B2 may satisfy the following condition:

$$0.4 < B2/A2 < 0.6$$

The first electrode may include two first active material patterns, and the two first active material patterns may be formed such that they are identical to each other. Also, the second electrode may include two second active material patterns, and the two second active material patterns may be formed such that they are identical to each other.

The first electrode and the second electrode may be simultaneously rolled with a separator disposed therebetween, and, referring to a cross-section view of the lithium secondary battery, the first electrode tab and the second electrode tab may be located in the same direction based on a center line of the lithium secondary battery in the thickness direction.

The first electrode and the second electrode may be simultaneously rolled with a separator disposed therebetween, and, referring to a cross-section view of the lithium secondary battery, the first electrode tab and the second electrode tab may be spaced apart from each other in the width direction of the lithium secondary battery.

Meanwhile, a method of manufacturing a lithium secondary battery according to the present invention includes: forming a first electrode and a second electrode; and attaching a first electrode tab to the first electrode and attaching a second electrode tab to the second electrode, wherein the forming of the first electrode and the second electrode includes: providing a current collector body; applying an active material on the current collector body at regular intervals and the same patterns to form a plurality of active material patterns; and cutting the current collector body into current collectors such that each of the current collectors has the plurality of active material patterns, thus forming a plurality of electrodes, each being provided with a center non-coated portion between the two active material patterns.

In the attaching of the first and second electrode tabs, the first electrode tab may be attached to a center non-coated portion of the first electrode, and the second electrode tab may be attached to a center non-coated portion of the second electrode.

When the length of the first electrode is A1 and the length between one end of the first electrode in the longitudinal direction and the center of the first electrode tab is B1, the A1 and the B1 may satisfy the following condition:

$$0.4 < B1/A1 < 0.6$$

When the length of the second electrode is A2 and the length between one end of the second electrode in the longitudinal direction and the center of the second electrode tab is B2, the A2 and the B2 may satisfy the following condition:

$$0.4 < B2/A2 < 0.6$$

The method may further include: rolling the first electrode and the second electrode with a separator disposed therebetween after attaching the electrode tabs.

Referring to a cross-section view of the lithium secondary battery, the first electrode tab and the second electrode tab may be located in the same direction based on a center line of the lithium secondary battery in the thickness direction.

Referring to a cross-section view of the lithium secondary battery, the first electrode tab and the second electrode tab may be spaced apart from each other in the width direction of the lithium secondary battery.

[Made for Invention]

Hereinafter, the present invention will be described in more detail with reference to the attached drawings.

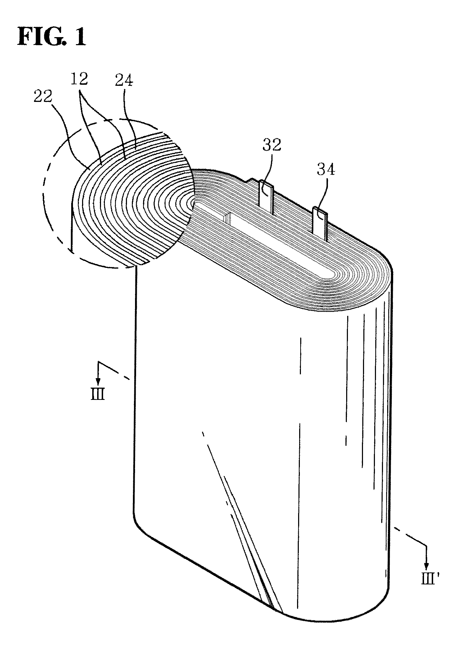

FIG. 1 is a perspective view shawing a lithium secondary battery according to an embodiment of the present invention.

Referring to FIG. 1, the lithium secondary battery according to an embodiment of the present invention includes: a first electrode 22 (hereinafter, referred to as "a cathode") and a second electrode 24 (hereinafter, referred to as "an anode") rolled with a separator 12 disposed therebetween; an electrode group including a first electrode tap 32 (hereinafter, referred to as "a cathode tab") connected to the cathode 22 and a second electrode tap 34 (hereinafter, referred to as "an anode tab") connected to the anode 24; and, a case (not shown) containing the electrode group.

Depending on the kind of lithium secondary, the case may be charged with a liquid electrolyte, or the separator 12 may serve as the electrolyte. Further, after the liquid electrolyte is charged in the case, polymerizable components are added thereto to thereby form a polymer electrolyte.

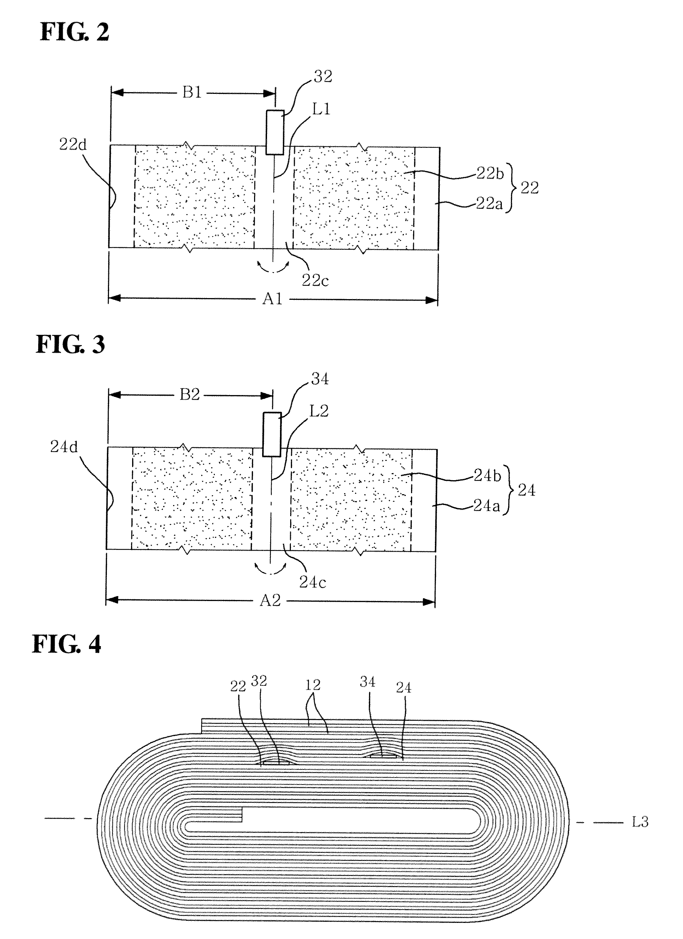

The cathode 22, cathode tab 32, anode 24 and anode tap 34 of the lithium secondary battery according to this embodiment will be described in more detail with reference to FIGS. 2, 3 and 4 as follows.

FIG. 2 is a plan view showing an unrolled cathode connected with a cathode tab in the lithium secondary battery of FIG. 1, FIG. 3 is a plan view showing an unrolled anode connected with an anode tab in the lithium secondary battery of FIG. 1, and FIG. 4 is a sectional view showing the lithium secondary battery taken along the line III-III of FIG. 1.

Referring to FIG. 2, the cathode 22 includes a first current collector 22a (hereinafter, referred to as "a cathode current collector") made of a conductive material, and first active material patterns 22b (hereinafter, referred to as "cathode active material patterns") formed on at least one side of the cathode current collector 22a.

Here, the cathode current collector 22a may be made of aluminum, and the cathode active material patterns 22b may be made of lithium-based transition metal oxide. However, the present invention is not limited thereto, and the materials used to make the cathode current collector 22a and the cathode active material patterns 22b may be different from the above-mentioned materials, and these materials belong to the scope of the present invention.

In this embodiment, the cathode active material patterns 22b are formed such that they are symmetrically disposed with a first center non-coated portion 22c (hereinafter, referred to as "a cathode center non-coated portion), which is not coated with a cathode active material, formed therebetween. A cathode tab 32 is connected to the cathode center non-coated portion 22c.

The cathode tab 32 may be made of aluminum. However, the present invention is not limited thereto, and the cathode tab 32 may be made of other materials besides aluminum. This cathode tab 32 may be attached to the cathode 22 by various methods, such as ultrasonic welding, resistance welding, laser welding, and the like.

As described above, in this embodiment, the cathode active material patterns 22b substantially participating in electrochemical reactions of batteries are formed such that they are symmetrically disposed with the cathode center non-coated portion 22c formed therebetween, and the cathode tab 32 is connected to the cathode center non-coated portion 22c, thus decreasing the distance the electric current moves due to the electrochemical reactions thereof.

This fact can be easily understood by comparing the maximum distance the electric current moves in this embodiment with the maximum distance the electric current moves in a conventional technology in which one cathode active material is formed and a cathode tab is connected to one end of a cathode. In the conventional technology, the maximum distance the electric current moves is the distance from one end to which the cathode tab is connected to the other end to which the cathode tab is not connected, and approximately corresponds to the total length of the cathode. Conversely, in this embodiment, the maximum distance the electric current moves is the distance from the cathode center non-coated portion 22c to which the cathode tab 32 is connected to one end of the cathode 22.

As can be easily understood by comparing the maximum distance the electric current moves in the conventional technology with that of electric current in this embodiment, the distance the electric current moves in this embodiment can be greatly decreased compared to the conventional technology. For this reason, the high-rate discharging characteristics of the lithium secondary battery can be improved, and the temperature increase of the lithium secondary battery, which is caused by the movement of electric current, can be minimized.

In this case, in order to allow the cathode active material patterns 22b substantially participating in electrochemical reactions to have a large area, it is preferred that a center line (L1) passing the center of the cathode 22 in the longitudinal direction be located in the cathode center non-coated portion 22c. When the center line (L1) is located in a portion other than the cathode center non-coated portion 22c, the cathode active material patterns 22b must be formed on the basis of the small-area side of both sides of the cathode center non-coated portion 22c in order that they may be symmetrical to each other, so that the area of the cathode active material patterns 22b becomes relatively small.

Considering this fact, the cathode tab 32 connected to the cathode center non-coated portion 22c may be connected to the cathode 22 in accordance with the following Mathematical Formula 1.

$$\text{Mathematical Formula 1}$$

$$0.4 < B1/A1 < 0.6$$

Here, A1 is the length of the cathode 22, and B1 is the length between one end 22d of the cathode 22 in the longitudinal direction and the center of the cathode tab 32.

Further, in the embodiment, in order to easily fabricate the cathode 22, the two cathode active material patterns 22b may be formed such that they are identical to each other. The formation of these two cathode active material patterns 22b will be described in more detail later.

Here, what is meant by saying that the two cathode active material patterns 22b are identically formed does not mean that the two cathode active material patterns 22b are completely identical to each other, and rather it may include the meaning that they are substantially identical to each other as far as the tolerance occurring in the manufacturing process is concerned.

Meanwhile, as shown in FIG. 3, in this embodiment, since the structure of the anode 24 is substantially identical to or extremely similar to the structure of the cathode 22 except for the material constituting the anode 24, the structure of the anode 24 substantially identical to or extremely similar to the structure of the cathode 22 will be briefly described. Further, since the structure of the anode tab 34 is substantially identical to or extremely similar to the structure of the cathode tab 32 except the material constituting the anode tab 34, the structure of the anode tab 34 substantially identical to or extremely similar to the structure of the cathode tab 32 will be succinctly described.

Referring to FIG. 3, the anode 24 includes a second current collector 24a (hereinafter, referred to as "an anode current collector") made of a conductive material, and second active material patterns 24b (hereinafter, referred to as "anode active material patterns") formed on at least one side of the anode current collector 24a.

Here, the anode current collector 24a may be made of copper, and the anode active material patterns 24b may be made of a carbon-based material. However, the present invention is not limited thereto, and the anode current collector 24a and the anode active material patterns 24b may be made of materials different from the above-mentioned materials, and these materials belong to the scope of the present invention.

In this embodiment, the anode active material patterns 24b are formed such that they are symmetrically disposed with a second center non-coated portion 24c (hereinafter, referred to as "an anode center non-coated portion"), which is not coated with an anode active material, formed therebetween. An anode tab 34 is connected to the anode center non-coated portion 24c.

The anode tab 34 may be made of nickel, copper or nickel-plated copper. However, the present invention is not limited thereto, and the anode tab 34 may be made of materials other than nickel, copper or nickel-plated copper. This anode tab 34 may be attached to the anode 24 by various methods, such as ultrasonic welding, resistance welding, laser welding, and the like.

In this embodiment, the anode tab 34 is connected to the anode center non-coated portion 24c, thus decreasing the distance the electric current moves due to the electrochemical reactions thereof. For this reason, the high-rate discharging characteristics of the lithium secondary battery can be improved, and the exothermic phenomenon generated by the movement of electric current can be minimized.

In this case, it is preferred that a center line (L2) passing the center of the anode 24 in the longitudinal direction be located in the anode center non-coated portion 24c. The anode tab 34 connected to the anode center non-coated portion 24c may be connected to the anode 24 in accordance with the following Mathematical Formula 2.

Mathematical Formula 2

$$0.4 < B2/A2 < 0.6$$

Here, A2 is the length of the anode 24, and B2 is the length between one end 24d of the anode 24 in the longitudinal direction and the center of the anode tab 34.

Further, in this embodiment, in order to easily fabricate the anode 24, the two anode active material patterns 24b may be formed such that they are identical to each other. Here, what is meant by saying that the two anode active material patterns 24b are identically formed does not mean that the two anode active material patterns 24b are completely identical to each other, and rather it may include the meaning that they are substantially identical to each other as far as the tolerance occurring in the manufacturing process is concerned.

In this embodiment, the cathode tab 32 is connected to the cathode center non-coated portion 22c, and the anode tab 34 is connected to the anode center non-coated portion, thus minimizing the distance the electric current moves in both the cathode 22 and the anode 24. Therefore, the high-rate discharging characteristics of the lithium secondary battery can be improved, and the temperature increase of the lithium secondary battery can be controlled.

As shown in FIG. 4, in this embodiment, referring to the cross-section view of the lithium secondary battery, the cathode tab 32 and the anode tab 34 are located in the same direction based on the center line (L3) of the thickness of the lithium secondary battery. Further, from the cross-section of the lithium secondary battery, the cathode tab 32 and the anode tab 34 are spaced apart from each other in the width direction of the electrode group not to allow the cathode tab 32 and the anode tab 34 to be electrically shorted.

However, the present invention is not limited thereto. The cathode tab 32 and the anode tab 34 may be located in a direction opposite to each other based on the center line (L3) of the thickness of the lithium secondary battery. That is, the disposition of the cathode tab 32 and the anode tab 34 may be variously modified depending on the structure of the lithium secondary battery. These modifications also belong to the scope of the present invention.

Hereinafter, a method of manufacturing a lithium secondary battery according to an embodiment of the present invention will be described in more detail.

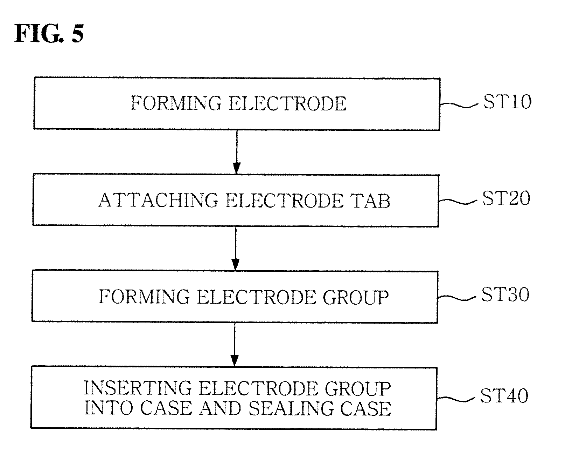

FIG. 5 is a flowchart showing a method of manufacturing a lithium secondary battery according to an embodiment of the present invention.

The method of manufacturing a lithium secondary battery according to this embodiment includes the steps of: forming a cathode and an anode (ST10); attaching a cathode tab to the cathode and attaching an anode tab to the anode (ST20); rolling the cathode and the anode with a separator disposed therebetween to form an electrode group (ST30); and inserting the electrode group into a battery case and then sealing the battery case (ST40).

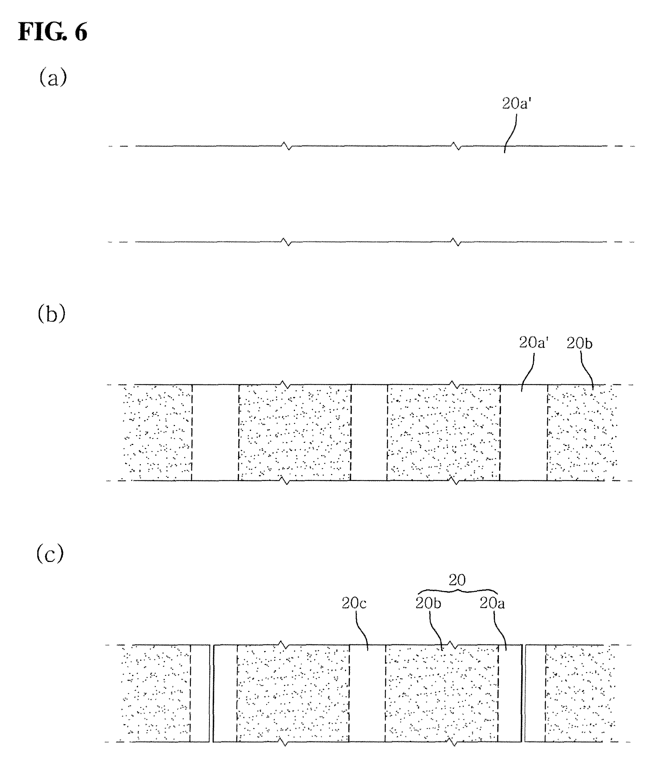

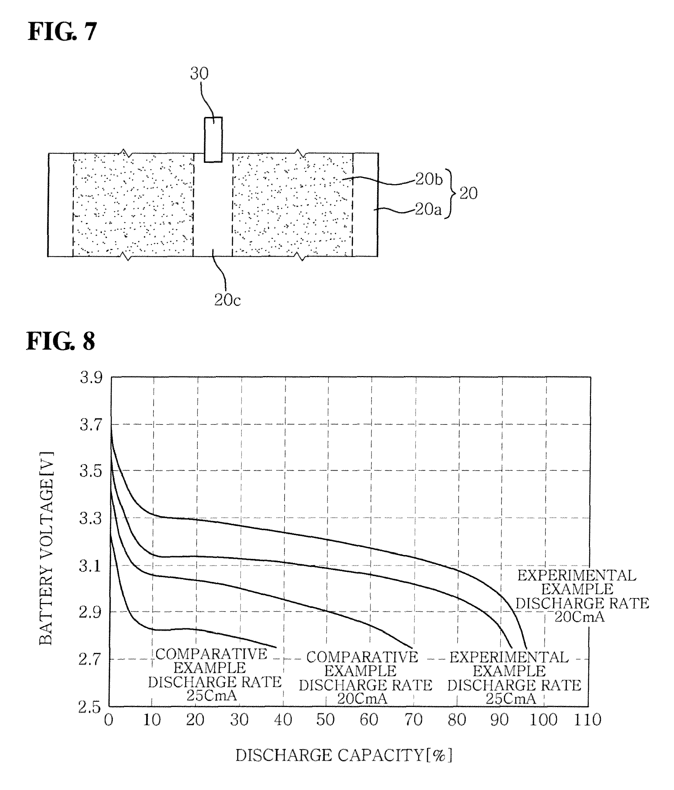

The above steps (ST10. ST20, ST30, and ST40) of the method will be described in detail with reference to FIGS. 6 (a) to (c) and FIG. 7 as follows. FIGS. 6 (a) to (c) are views showing the step (ST10) of forming the electrodes in the method of FIG. 5, and FIG. 7 is a view showing the step (ST20) of attaching the electrode tabs to the electrodes in the method of FIG. 5.

First, as shown in FIGS. 6 (a) to (c), electrodes 20, each including a current collector and active material patterns formed at least one side of the current collector, that is, a cathode (reference numeral 22 of FIG. 2) and an anode (reference numeral 24 of FIG. 3) are formed. In the step of forming the electrodes (ST10), since the cathode and the anode are substantially identical to each other except for the materials constituting their respective current collectors and active material forms, each of the cathode and the anode is commonly designated by an electrode 20, and the step of forming the electrode 20 will be described.

As shown in FIG. 6 (a), a current collector body 20a' is provided. A current collector body 20a' made of aluminum may be provided when a cathode is formed, and a current collector body 20a' made of copper may be provided when an anode is formed.

Subsequently, as shown in FIG. 6 (b), the active material is applied on the current collector body 20a' at regular intervals and the same patterns to form a plurality of active material patterns 20b. In this case, a carbon-based material may be used as an anode active material, and a lithium-based transition metal oxide may be used as the cathode active material. In the present invention, methods of applying an active material are not limited, and active material patterns may be formed using various coating methods.

Subsequently, as shown in FIG. 6 (c), the current collector body 20a' is cut into current collectors 20a such that each of the current collectors 20a has two active material patterns 20b, thus forming a plurality of electrodes 20, each being provided with a center non-coated portion 20c. Since the active material patterns 20b are formed on the current collector body 20a' at regular intervals and have the same pattern, when the current collector body 20a' is cut in this way, the two active material patterns 20b are symmetrically disposed with the center non-coated portion 20c formed therebetween.

As described above, in this embodiment, the active material patterns 20b are formed on the current collector body 20a' at regular intervals and have the same pattern, and then the current collector body 20a' is cut to form the plurality of electrodes 20. For this reason, since the existing equipment can be repetitively used, the cost increase due to equipment replacement can be reduced, and the electrodes 20 can be formed by a simple process.

Subsequently, as shown in FIG. 7, the cathode tab (reference numeral 32 of FIG. 2) is attached to the cathode (reference numeral 22 of FIG. 2), and the anode tab (reference numeral 34 of FIG. 3) is attached to the anode (reference numeral 24 of FIG. 3). In the step of attaching the electrode tabs (reference numeral ST20 of FIG. 5), since the cathode tab and the anode tab are substantially identical to each other except for the materials constituting the cathode tab and the anode tab, each of the cathode tab and the anode tab is commonly designated as an electrode tab, and the step of attaching the electrode tab will be described.

The electrode tab 30 is attached to the center non-coated portion 20c disposed between the two active material patterns 20b by welding. Here, an electrode tab made of aluminum may be used as the cathode tab, and an electrode tab made of nickel, copper or nickel-plated copper may be used as the anode tab.

In this case, the cathode tab and the anode tab may be connected to the cathode and the anode while satisfying the conditions of Mathematical Formula 1 and Mathematical Formula 2 above, respectively (refer to FIGS. 2 and 3).

Subsequently, the cathode (reference numeral 22 of FIG. 1) and the anode (reference numeral 24 of FIG. 1) are rolled with the separator (reference numeral 12 of FIG. 1) disposed therebetween, thus forming the electrode group shown in FIG. 1.

In this case, the cathode tab (reference numeral 32 of FIG. 1) and the anode tab (reference numeral 34 of FIG. 1) are disposed such that they do not create a short. For example, as shown in FIG. 4, in order to prevent the cathode tab 32 and the anode tab 34 from shorting, the cathode tab 32 and the anode tab 34 may be located in the same direction based on the center line (L3) of the lithium secondary battery in the thickness direction, and the cathode tab 32 and the anode tab 34 may be spaced apart from each other in the width direction of the lithium secondary battery.

For this purpose, after the positions of the cathode tab 32 and anode tab 34 after rolling are predetermined, the cathode tab 32 and anode tab 34 are formed at the predetermined positions, and then the cathode 22 and anode 24 are rolled.

Finally, the electrode group 10 is inserted into a battery case (not shown), and then the battery case is sealed, thereby completing the lithium secondary battery.

Hereinafter, the present invention will be described in more detail with reference to the following Examples. These following Examples are set forth to illustrate the present invention, and the scope of the present invention is not limited thereto.

Experimental Example

$LiCoO_2$ as a cathode active material, polyvinylidenefluoride (PVDF) as a binder, and carbon black as a conductive material were mixed to form a mixture, and then N-methylpyrrolidone (NMP) was added to the mixture to prepare a slurry.

The slurry was applied on one side of a cathode current collector body made of aluminum foil at regular intervals and was then applied on the other side thereof at regular intervals to form a plurality of cathode active material patterns. The cathode current collector body including the plurality of cathode active material patterns formed on both sides thereof was dried until N-methylpyrrolidone (NMP) was completely volatilized, and was then roll-pressed.

The roll-pressed cathode current collector body was cut to form a cathode including two cathode active material patterns and a cathode center non-coated portion formed between the two cathode active material patterns.

A cathode tab made of aluminum was attached to the cathode center non-coated portion of the cathode by laser welding.

Natural graphite as an anode active material, styrene-butadiene rubber (SBR) as a binder, and carboxymethyl cellulose (CMC) were mixed to form a mixture, and then water was added to the mixture to prepare a slurry.

The slurry was applied on one side of an anode current collector body made of copper foil at regular intervals and was then applied on the other side thereof at regular intervals to form a plurality of anode active material patterns. The anode current collector body including the plurality of anode active material patterns formed on both sides thereof was dried until water, which is a solvent, was completely volatilized, and was then roll-pressed.

The roll-pressed anode current collector body was cut to form an anode including two anode active material patterns and an anode center non-coated portion formed between the two anode active material patterns.

An anode tab made of nickel-plated copper was attached to the anode center non-coated portion of the anode by laser welding.

The cathode provided with the cathode tab and the anode provided with the anode tab were rolled with a separator disposed therebetween, and then the rolled cathode and anode were inserted into a pouch-type case, and then an electrolyte was charged in the pouch-type case to manufacture a lithium secondary battery. A liquid electrolyte prepared by adding $LiPF_6$ to a mixed solution of ethylene carbonate and diethylene carbonate was used as the electrolyte.

Comparative Example

$LiCoO_2$ as a cathode active material, polyvinylidenefluoride (PVDF) as a binder, and carbon black as a conductive material were mixed to form a mixture, and then N-methylpyrrolidone (NMP) was added to the mixture to prepare a slurry.

The slurry was applied on both sides of a cathode current collector body made of aluminum foil, and then the cathode current collector body coated with the slurry was dried until N-methylpyrrolidone (NMP) was completely volatilized, and was then roll-pressed. The roll-pressed cathode current collector body was cut to form a cathode including one cathode active material pattern.

A cathode tab made of aluminum was attached to one end of the cathode current collector body by laser welding.

Natural graphite as an anode active material, styrene-butadiene rubber (SBR) as a binder, and carboxymethyl cellulose (CMC) were mixed to form a mixture, and then water was added to the mixture to prepare a slurry.

The slurry was applied on both sides of an anode current collector body made of copper foil, and then the anode current collector body coated with the slurry was dried until water, which is a solvent, was completely volatilized, and was then roll-pressed. The roll-pressed anode current collector body was cut to form an anode including one anode active material pattern.

An anode tab made of nickel-plated copper was attached to one end of the anode current collector body by laser welding.

The cathode provided with the cathode tab and the anode provided with the anode tab were rolled with a separator disposed therebetween, and then the rolled cathode and anode were inserted into a pouch-type case, and then an electrolyte was charged in the pouch-type case to manufacture a lithium secondary battery. A liquid electrolyte prepared by adding $LiPF_6$ to a mixed solution of ethylene carbonate and diethylene carbonate was used as the electrolyte.

FIG. 8 shows the relationship of battery voltage to discharge capacity when the discharge rates of the lithium secondary battery of the Experimental Example and the discharge rates of the lithium secondary battery of Comparative Example are 20 CmA and 25 CmA, respectively. Referring to FIG. 8, when the discharge rate is 20 CmA, it can be seen that the discharge capacity of the lithium secondary battery of Experimental Example is approximately 96%, whereas the discharge capacity of the lithium secondary battery of the Comparative Example is approximately 70%. Further, when the discharge rate is 25 CmA, it can be seen that the discharge capacity of the lithium secondary battery of the Experimental Example is approximately 92%, whereas the discharge capacity of the lithium secondary battery of the Comparative Example is below 40%. Therefore, it can be seen from the results that the lithium secondary battery of the Experimental Example has high discharge capacity compared to the lithium secondary battery of the Comparative Example, and that the difference in discharge capacity between the lithium secondary battery of the Experimental Example and the lithium secondary battery of the Comparative Example is further increased at high-rate discharge.

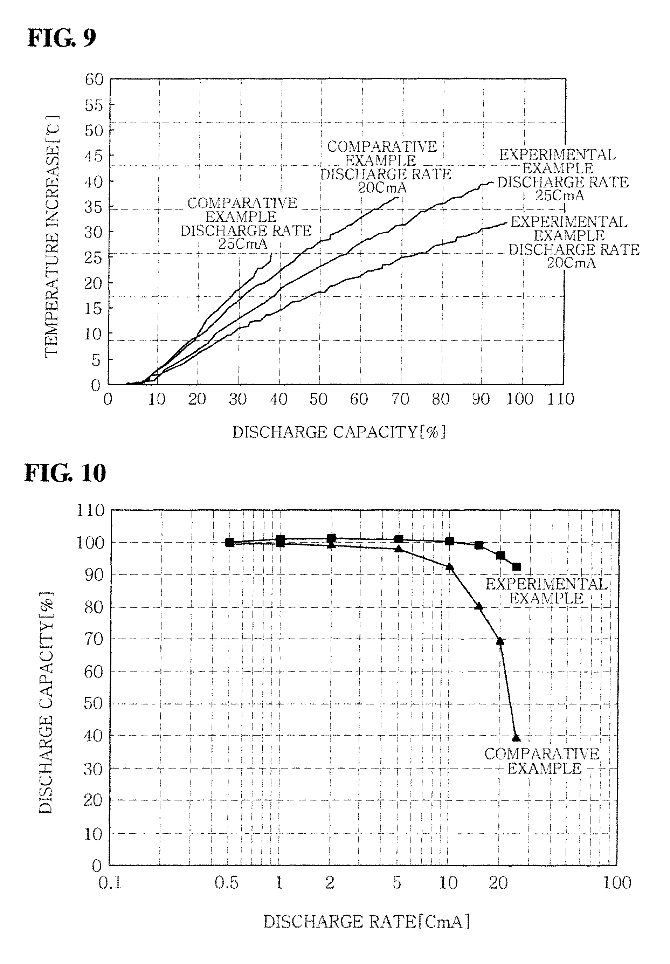

FIG. 9 shows the relationship of temperature increase to discharge capacity when the discharge rates of the lithium secondary battery of the Experimental Example and the discharge rates of the lithium secondary battery of the Comparative Example are 20 CmA and 25 CmA, respectively. Referring to FIG. 9, both when the discharge rate is 20 CmA and when the discharge rate is 25 CmA, it can be seen that the temperature increase of the lithium secondary battery of the Experimental Example is very small compared to that of the lithium secondary battery of the Comparative Example. The reason for this is because the lithium secondary battery of the Experimental Example minimizes the temperature increase thereof by reducing the moving distance of electric current.

FIG. 10 shows the relationship of discharge capacity to discharge rate in the lithium secondary battery of the Experimental Example and the lithium secondary battery the Comparative Example. Referring to FIG. 10, it can be seen that the high-rate discharging characteristics of the lithium secondary battery of the Experimental Example are more excellent than those of the lithium secondary battery of the Comparative Example.

That is, when the discharge rate is 10 CmA, it can be seen that the discharge capacity of the lithium secondary battery of the Experimental Example is approximately 100%, whereas the discharge capacity of the lithium secondary battery of the Comparative Example is approximately 90%. Further, when the discharge rate is 20 CmA higher than 10 CmA, it can be seen that the discharge capacity of the lithium secondary battery of the Experimental Example is approximately 96%, whereas the discharge capacity of the lithium secondary battery of the Comparative Example is approximately 70%. Therefore, it can be seen from the results that the discharge capacity of the lithium secondary battery of the Comparative Example is rapidly decreased at high-rate discharge, whereas the discharge capacity of the lithium secondary battery of the Experimental Example is high even at high-rate discharge.

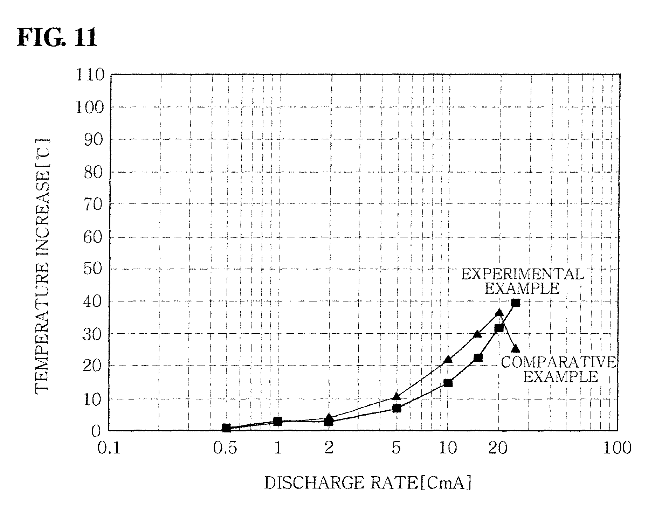

FIG. 11 shows the relationship of temperature increase to discharge rate in the lithium secondary battery of the Experimental Example and the lithium secondary battery the Comparative Example. Referring to FIG. 11, it can be seen that the temperature increase of the lithium secondary battery of the Experimental Example is very small compared to that of the lithium secondary battery of the Comparative Example even at high-rate discharge. The reason for this is because the lithium secondary battery of the Experimental Example minimizes the exothermic phenomenon thereof by reducing the distance the electric current moves.

For reference, it is shown in FIG. 11 that the temperature increase of the lithium secondary battery of the Comparative Example is decreased when the discharge rate is above 20 CmA. However, the reason for this is no more than that electric current flows for a very short time due to the high discharge rate. That is, the temperature increase of the lithium secondary battery of the Comparative Example decreases because the time that it takes the lithium secondary battery of the Comparative Example to operate as a battery becomes short when the discharge rate is above 20 CmA. Therefore, when electric current flows for a long time, the temperature of the lithium secondary battery of the Comparative Example will rapidly increase.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

**Claims**

1. A lithium secondary battery, comprising:

    a first electrode including a first current collector, and first active material patterns formed on the first current collector such that the first active material patterns are symmetrically disposed with a first center non-coated portion formed therebetween;
    a second electrode including a second current collector, and second active material patterns formed on the second current collector such that the second active material patterns are symmetrically disposed with a second center non-coated portion formed therebetween;
    a first electrode tab connected to the first center non-coated portion; and
    a second electrode tab connected to the second center non-coated portion.

2. The lithium secondary battery according to claim 1, wherein a center line passing through a center of the first electrode in a longitudinal direction is located in the first center non-coated portion, and a center line passing through a center of the second electrode in a longitudinal direction is located in the second center non-coated portion.

3. The lithium secondary battery according to claim 1, wherein, when a length of the first electrode is A1 and a length between one end of the first electrode in a longitudinal direction and a center of the first electrode tab is B1, the A1 and the B1 satisfy the following condition:

$$0.4 < B1/A1 < 0.6$$

4. The lithium secondary battery according to claim 1, wherein, when a length of the second electrode is A2 and a length between one end of the second electrode in a longitudinal direction and a center of the second electrode tab is B2, the A2 and the B2 satisfy the following condition:

$$0.4 < B2/A2 < 0.6$$

5. The lithium secondary battery according to claim 1, wherein the first electrode includes two first active material patterns, and the two first active material patterns are formed such that they are identical to each other, and
the second electrode includes two second active material patterns, and the two second active material patterns are formed such that they are identical to each other.

6. The lithium secondary battery according to claim 1, wherein the first electrode and the second electrode are simultaneously rolled with a separator disposed therebetween, and,
in a cross-section view of the lithium secondary battery, the first electrode tab and the second electrode tab are located in the same direction based on a center line of the lithium secondary battery in a thickness direction.

7. The lithium secondary battery according to claim 1, wherein the first electrode and the second electrode are simultaneously rolled with a separator disposed therebetween, and,
in a cross-section view of the lithium secondary battery, the first electrode tab and the second electrode tab are spaced apart from each other in a width direction of the lithium secondary battery.

8. A method of manufacturing a lithium secondary battery, comprising:

    forming a first electrode and a second electrode; and
    attaching a first electrode tab to the first electrode and attaching a second electrode tab to the second electrode,
    wherein the forming of the first electrode and the second electrode includes:

        providing a current collector body;
        applying an active material on the current collector body at regular intervals and the same patterns to form a plurality of active material patterns; and
        cutting the current collector into current collectors such that each of the current collectors has the plurality of active material patterns, thus forming a plurality of electrodes, each being provided with a center non-coated portion between the two active material patterns.

9. The method according to claim 8, wherein, in the attaching of the first and second electrode tabs, the first electrode tab is attached to a center non-coated portion of the first electrode, and the second electrode tab is attached to a center non-coated portion of the second electrode.

10. The method according to claim 8, wherein, when a length of the first electrode is A1 and a length between one end of the first electrode in a longitudinal direction and a center of the first electrode tab is B1, the A1 and the B 1 satisfy the following condition:

$$0.4 < B1/A1 < 0.6$$

11. The method according to claim 8, wherein, when a length of the second electrode is A2 and a length between one end of the second electrode in a longitudinal direction and a center of the second electrode tab is B2, the A2 and the B2 satisfy the following condition:

$$0.4 < B2/A2 < 0.6$$

12. The method according to claim 8, further comprising: rolling the first electrode and the second electrode with a separator disposed therebetween after attaching the electrode tabs.

13. The method according to claim 8, wherein, in a cross-section view of the lithium secondary battery, the first electrode tab and the second electrode tab are located in the same direction based on a center line of the lithium secondary battery in a thickness direction.

14. The method according to claim 8, wherein, in a cross-section of the lithium secondary battery, the first electrode tab and the second electrode tab are spaced apart from each other in a width direction of the lithium secondary battery.

# FIG. 1

## FIG. 2

## FIG. 3

## FIG. 4

# FIG. 5

| | |
|---|---|
| FORMING ELECTRODE | ST10 |

↓

| | |
|---|---|
| ATTACHING ELECTRODE TAB | ST20 |

↓

| | |
|---|---|
| FORMING ELECTRODE GROUP | ST30 |

↓

| | |
|---|---|
| INSERTING ELECTRODE GROUP INTO CASE AND SEALING CASE | ST40 |

# FIG. 6

(a)

20a'

(b)

20a'  20b

(c)

20

20c  20b  20a

## FIG. 7

## FIG. 8

**FIG. 9**

**FIG. 10**

## FIG. 11